(19) Europäisches Patentamt
European Patent Office
Office européen des brevets

(11) **EP 3 896 542 B1**

(12) **EUROPEAN PATENT SPECIFICATION**

(45) Date of publication and mention
of the grant of the patent:
**09.08.2023 Bulletin 2023/32**

(51) International Patent Classification (IPC):
**G05B 23/02** *(2006.01)*    **G06N 20/20** *(2019.01)*

(21) Application number: **20169568.1**

(52) Cooperative Patent Classification (CPC):
**G05B 23/0237; G05B 23/0281; G06N 20/00**

(22) Date of filing: **15.04.2020**

(54) **METHOD AND DEVICE FOR DIAGNOSING COMPONENTS OF A TECHNICAL SYSTEM**

VERFAHREN UND VORRICHTUNG ZUR DIAGNOSE VON KOMPONENTEN EINES TECHNISCHEN SYSTEMS

PROCÉDÉ ET DISPOSITIF PERMETTANT DE DIAGNOSTIQUER DES COMPOSANTS D'UN SYSTÈME TECHNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Hitachi, Ltd.**
**Tokyo 100-8280 (JP)**

(72) Inventors:
• **KATO, Tetsuji**
**London, EC2Y (GB)**
• **BROADBENT, Andrew**
**London, EC2Y (GB)**
• **YAMASHITA, Tomoaki**
**London, EC2Y (GB)**
• **ELLIS, Robert**
**London, EC2Y (GB)**

(74) Representative: **MERH-IP Matias Erny Reichl Hoffmann**
**Patentanwälte PartG mbB**
**Paul-Heyse-Strasse 29**
**80336 München (DE)**

(56) References cited:
**AT-A1- 508 714    US-A1- 2013 173 218**

**Description**

The herein described subject matter relates to a method and a diagnostic device for diagnosing a component fault of a technical system.

The technical system may be a transportation means such as a train or a bus, an energy system such as a wind turbine or a gas turbine, an industrial application such as a foundry or a rolling mill and/or a conveyor system such as an elevator system.

Unexpected failures of a technical system lead to operational disruption, increased costs, and safety concerns. To provide high availability, technical systems are usually equipped with a large number of sensors to monitor the conditions of the system components. Rail vehicles, for example, are usually equipped with vibration sensors which are mounted on the axles and/or the wheels sets, in order to monitor the behaviour of the single components and to predict the need for maintenance. Patent Literature 1: JP-2017-502639 A

Patent Literature 1 describes a system and a method for real-time, on-board monitoring of various operational parameters of a railcar using a plurality of wireless sensor nodes installed thereon. The wireless sensor nodes collect operational data and are capable of detecting certain anomalies based on the collected data. When anomalous operational data is detected an alert is raised and the data is communicated to a management unit located on the railcar. However, not every detected anomalous operation means a real fault of a component. In some cases, unusual environmental conditions can cause irregular operation of a component and lead to a misdetection. For example, the vibrations measured at rotors of a wind turbine may be above the allowable threshold in case of strong wind. In this case, the high vibrations are measurable on all rotors, whereas it is more likely that a defect in the rotor bearing, which causes higher vibrations, will be measured merely on a single rotor. Thus, a correlation of presumed errors detected at different components of the same type, which are operated under the same environmental conditions, is helpful to avoid misdetection. AT 508 714 A1 discloses a method comprising the steps: - receiving at least two channels of target measurement data in the reference state of the system; - defining a target channel from the channels of the target measurement data; - preprocessing the target measurement data; - forming a model based on the measurement data for the target channel from the preprocessed measurement data; - receiving at least two channels of actual measured values in the running operating state of the system, among which an actual measured value for the target channel and an actual measured value for at least one further channel are present; - calculating a target value for the target channel using the model and considering the actual measured value for at least one further channel; - determining a remainder by comparing the target value to the actual measured value for the target channel; - deciding whether to restore or replace the roller by comparing the magnitude of the remainder to a threshold value. US 2013/173218 A1 shows a method that acquires data of runtime status of said plant from a plurality of sensors of said plant, makes a model from training data that corresponds to the regular runtime status of said plant, employs the training data thus modeled in computing a anomaly measure of the data acquired from the sensors, and detects anomalies.

An object of the herein described subject matter is to provide a method and a diagnostic device which reliably identify faults of components in a technical system without increasing the monitoring effort. This problem is solved by the subject matter according to the independent claims. Further preferred developments are described by the dependent claims.

The herein described subject matter comprises a method for identifying and verifying a fault of a component of a technical system having a diagnostic device.

The term "component" may be understood in the meaning of "part", "device" and "unit". In other words, the components of a train, as an example for a technical system, may be, e.g., the axles, the wheels and the bearings as well as the automatic doors, the air conditioning and the lavatories. The technical system may comprise a plurality of components, wherein the plurality of components may include one or more groups of components of a same type.

A group of components of a same type may include components having the same or a similar design and/or function. For example, the wheel sets of a rail car, the rotor blades of a wind turbine and/or the doors of an elevator may represent a group of components of the same type.

According to an aspect, the method may comprise a step of receiving event data of the plurality of components over a predetermined observation period, wherein the predetermined observation period may comprise a plurality of time intervals of predetermined length, and the event data of each of the plurality of components may comprise a number of detected errors of a component per time interval over the predetermined observation period. The time interval may be in a range of 30s to 1 week and the observation period may be in a range of 10 min to 1 month. The term "detected error" may be understood as a detected irregularity or anomalous operation of a component. For example, an error may be detected when a vibration measured on a wheel set of a train is over a predetermined threshold or when a malfunction of an automatic door of an elevator is determined by a door sensor unit. It shall be noticed that a "detected error" does not necessarily mean that the respective component has a real mechanical or electrical failure but only that a monitored measuring signal representing the condition of the component is out of its predetermined range.

The method may further comprise a step of performing at least one regression analysis of event data of a group of components of the same type, the event data of each component of the group of components being determined under same environmental conditions. The environmental conditions may comprise the surrounding conditions of the components such as temperature and other whether conditions and/or the operation conditions of the technical system such as speed or route of a train, load of an elevator and so on. Furthermore, the method may determine residual values of event data of at least one component of the group of components and may identify a fault of the at least one component of the group of components depending on the determined residual values. The method may identify the fault of the at least one component of the group of components of the same type if at least one determined residual value of the event data of the at least one component is above a predetermined residual threshold.

Performing a regression analysis of event data of a group of components of the same type allows for determining whether single components show operational irregularities suggesting a technical fault of the respective components. In case that the event data of a group of components shows good correlation, it can be concluded that all components behave similarly which means that none of them has a technical fault. However, if the regression analysis of a component's event data shows a number of residual values being above a predetermined residual threshold, a technical fault of the respective component may be identified.

Preferably, the regression analysis may be a linear regression analysis

$$\hat{y} = a + bx + e \quad (1),$$

wherein event data y, x of at least two components of the same type are correlated. The residual values e of a linear regression are the observed values minus the predicted values.

$$e = y - \hat{y} \quad (2)$$

The regression analysis may be performed using training data which constitutes the normal state of the components of a technical system. Thus, the regression parameters a, b and the predetermined residual threshold for each group of components may be determined. When the regression model based on training data has been created, event data of the respective components, which were respectively acquired during an observation period, may be continuously added to the regression model. A technical fault of a component may be identified if a residual value of the related event data is above the predetermined residual value. The predetermined residual value may preferably in the range of 2 to 5.

The method may further comprise a step of performing a regression analysis of event data of a first component and a second component. The first and the second component may belong to the group of components of the same type and the event data of the first and the second component may be determined under the same environmental conditions for the predetermined observation period. When performing the regression analysis, the event data of the first component may be used as input values and the event data of the second component may be used as output values. Based on the regression analysis, the method may determine residual values of the event data of the second component and may identify at least one fault of the second component if at least one residual value of the event data of the second component is above the predetermined residual threshold. According to the description above the regression analysis of the first and the second component may be performed using training data constituting the normal state of the first and the second component. When the regression model based on the training data has been created, event data of the first and the second component, which were acquired during an observation period, may be continuously added to the regression model. A technical fault of the second component may be identified if at least one residual value of the related event data is above the predetermined residual value.

The method may further comprise a step of performing a regression analysis of event data of the second component and a third component. The second and the third component may belong to the group of components of the same type and the event data of the second and the third component may be determined under the same environmental conditions for the predetermined observation period. When performing the regression analysis, the event data of the third component may be used as input values and the event data of the second component may be used as output values of the regression analysis. Based on the regression analysis the method may determine residual values of the event data of the second component and may verify the at least one fault of the second component if at least one residual value of the event data of the second component is above a predetermined residual threshold. In other words, if the residual values of the second component's event data are above the predetermined threshold when integrating in the regression model of the event data of first and the third component, the technical fault of the second component may be validated.

In case the that none of the residual values of the event data of the second component is above the predetermined residual threshold, the method may identify at least one incorrect event data value of the first component. In other words, if the residual values of the second component's event data are above the predetermined threshold when integrating in the regression model of the first component, but below the predetermined threshold when integrating in the regression model of the third component, the event data of the first component may be measured incorrectly. Thus, a technical fault of the second component can be reliably determined by merely correlating the event data of the second component with the event data of the first and the third component without the need of further measuring equipment.

It shall be noted, that the first, second and third component as described above shall be understood as an example to explain the process of correlating event data of different components to identify and verify a technical fault of at least one component belonging to a group of components of the same type operating under the same environmental conditions. It may also be possible that event data of more than one component is used as input/output data of a regression analysis as long as the event data is related to components of the same type operating under the same environmental conditions.

The method may further determine a severity value of the at least one verified fault of the second component depending on an amplitude of the at least one residual value being above the predetermined residual threshold. For example, if the amplitude of the residual value of the second component is less than twice as high as the predetermined residual threshold, a low severity value may be determined. If an amplitude of the residual value of the second component is more than twice as high as the predetermined residual threshold, a high severity value may be determined.

The method may issue a request for repair if a number of verified faults of a component is above a predetermined number. The verified faults may be determined for each time interval of the observation period. The predetermined number of verified faults per time interval may preferably be in a range of 5 to 15.

Alternatively or in addition, the method may issue a request for repair if a severity value of a verified fault of a component is above a predetermined severity value threshold. The predetermined severity value threshold may preferably be in the range of 1.5 to 3 times the predetermined residual threshold.

Alternatively or in addition, the method may issue a request for repair if a verified fault of a component is maintained for a predetermined number of observation periods. The predetermined number of observation periods may preferably be in a range of 3 to 6.

The method may adapt the predetermined residual threshold over a lifetime of a component. For this purpose, the variance of the determined residual values of each component may be continuously monitored. If the variance of the residual values increases continuously with a gradient less than a predetermined gradient value, the predetermined residual threshold may be increased depending on the determined gradient. The threshold adaption may be carried out after a predetermined number of observation periods. The predetermined gradient value may preferably be in a range of 1 % to 3% and the number of observation periods may preferably be in a range of 10 to 100. For example, if the variance of the residual values continuously increases by 1% over 50 observation periods, the predetermined residual threshold may be increased by 0.5 after 50 observation periods. This allows to avoid error detections which are only caused by normal mechanical wear of the components.

The herein described subject matter may further comprise a diagnostic device including at least one input unit, at least one database, at least one analyzing unit and at least one output unit, wherein the diagnostic device may perform the above described method. The diagnostic device may be attached to a technical system such as a train, a wind turbine or an elevator or may be located outside the technical system. The diagnostic device may be connected to a plurality of sensor units attached to the technical system for receiving measuring signals and/or event data of a plurality of components. Furthermore, the diagnostic device may be connected to the control system/management system of the technical system. It may also be possible that the diagnostic device is part of the control system/management system of the technical device or vice versa.

The at least one input unit of the diagnostic device may receive event data of a plurality of components over a predetermined observation period, wherein the predetermined observation period may comprise a plurality of time intervals of predetermined length. The event data of each of the plurality of components may comprise a number of detected errors of a component per time interval over the predetermined observation period. Alternatively or additionally, the input unit may receive measuring signals from the sensor units and may perform the error detection by comparing the measuring signals with predetermined measuring threshold values.

The at least one analyzing unit of the diagnostic device may perform at least one regression analysis of event data of a group of components of the same type, wherein the event data of each component of the group of components may be determined under same environmental conditions. The analyzing unit may further determine residual values of event data of at least one component of the group of components and may identify a fault of the at least one component of the group of components depending on the determined residual values. The analyzing unit may identify a fault of at least one component of the group of components of the same type if at least one determined residual value of the event data of the at least one component is above a predetermined residual threshold.

The output unit of the diagnostic device may issue a request for repair if a number of verified faults of a component is above a predetermined number, and/or if a severity value of a verified fault of a component is above a predetermined severity value threshold, and/or if a verified fault of a component is maintained for a predetermined number of observation periods. For example, the output unit may be a human machine interface which may receive the respective request for repair from the analyzing unit and may display the request on a screen and/or may automatically transmit the request to a repair service. The output unit may further provide all relevant results of the regression analysis required for condition-based maintenance to an operator of the technical system, such as the development of amplitudes of the residual values and/or the development of the verified technical faults of each component

The diagnostic device may comprise at least one event database and at least one threshold database. In the event database the received event data of all components, the results of the regression analyses, such as the determined residual values, and the identified technical faults of each monitored component may be stored for a large number of observation periods. Thus, an extensive database may be provided that can be used to improve the accuracy of the regression analysis and to document the deterioration process of each component.

In the threshold database the predetermined residual thresholds of each monitored component may be stored, wherein the stored residual thresholds may be adapted over lifetime of the respective component as described above. In this way, the wear of each component can be supervised. This is helpful for planning train maintenance and avoiding error detection due to normal mechanical wear.

The herein described subject matter may further include a technical system comprising a plurality of components wherein the plurality of components may include one or more groups of components of a same type, and the above described diagnostic device.

Furthermore, the herein described subject matter may comprise a computer program product storable in a memory comprising instructions which, when carried out by a computer, may cause the computer to perform the above described method.

Summarizing, the herein described subject matter enables a reliable detection and verification of mechanical or electrical component faults of a technical system without the need of additional measuring equipment.

In the following the invention will be further explained based on at least one preferential example of the invention with reference to the attached exemplary drawings, wherein:

Fig. 1      depicts schematically a train having two railcars as an example for a technical system;

Fig. 2      depicts schematically a number of detected errors of different components of the same type in successive time intervals of an observation period;

Figs. 3a and 3b      depict schematically the detection and verification of a component fault by means of regression analyses

Fig. 4      depicts a first schematic example of the diagnostic device;

Fig. 5      depicts a second schematic example of the diagnostic device.

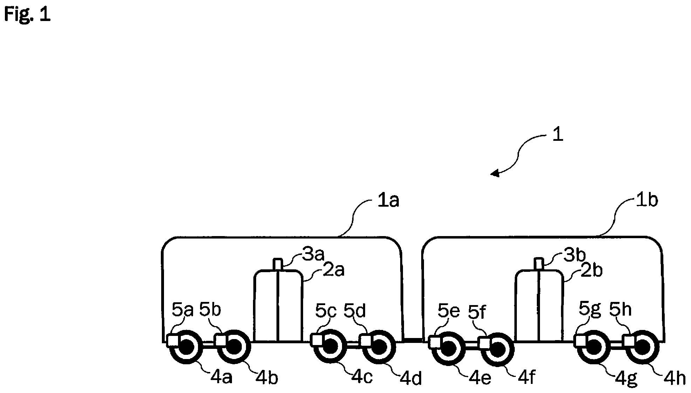

Fig. 1 depicts schematically a train 1 having two railcars 1a, 1b as an example for a technical system. Each of the depicted railcars has an automatic door 2a, 2b and four wheel sets 4a - 4h. The automatic doors 2a, 2b are each equipped with a door sensor unit 3a, 3b to determine whether the doors 2a, 2b open and close correctly. The door sensor unit 3a, 3b may, e.g., include a contact sensor attached to each end stop of the respective automatic door 2a, 2b for detecting whether the door 2a, 2b is fully opened and closed. In case the door 2a, 2b does not reach its end stops, an error may be detected by the door sensor unit 3a, 3b, and an error counter may be increased. Alternatively or additionally, the door sensor unit 3a, 3b may include a position sensor for continuously measuring the whole opening and closing procedure of the automatic doors 2a, 2b.

Furthermore, the depicted railcars 1a, 1b are equipped with vibration sensors 5a - 5h attached to the wheel sets 4a -4h of the railcars 1a, 1b. The vibration sensors 5a - 5h may be mounted on the axles, the bearings and/or the wheels of the wheel sets 4a - 4h. In case an amplitude of a measured vibration exceeds a predetermined measuring threshold value, an error may be detected, and an error counter may be increased.

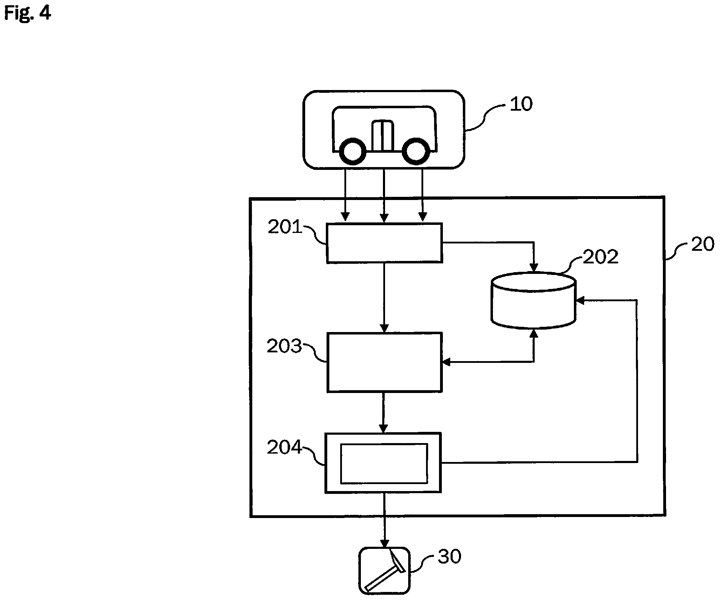

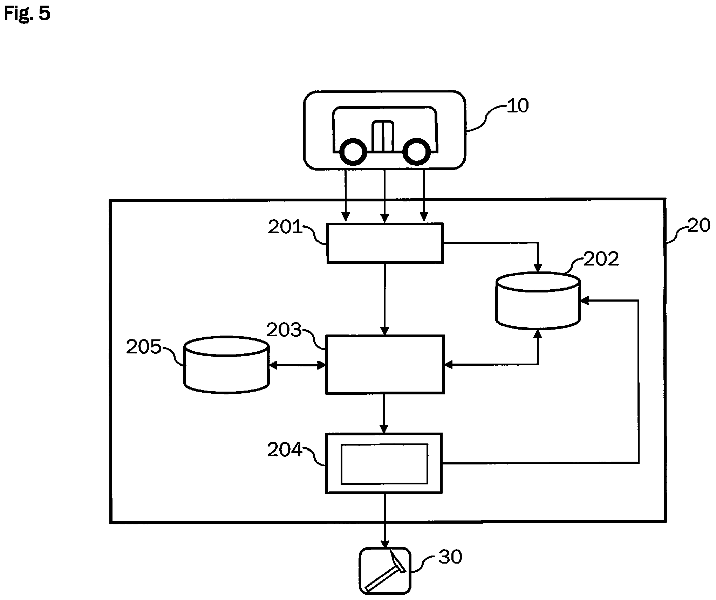

The error detection of the automatic doors 2a, 2b and the wheel sets 4a - 4h may be implemented in the respective sensor units 2a, 2b, 5a - 5h. Alternatively or additionally, the error detection may be implemented in the train management system (TMS), the vehicle control system and/or in any other monitoring/controlling system capable to deal with error detection. In this case the sensor units 2a, 2b, 5a - 5h may send the measuring signals to the TMS, the vehicle control system and/or to another monitoring/controlling system via a data connection, which may be wireless and/or by wire. Alternatively or additionally, the error detection may be implemented in the diagnostic device 20 (see Figs. 4 and 5) which may also receive the measuring signals via a data connection (wireless and/or by wire) from the respective sensor units 2a, 2b, 5a - 5h.

Each railcar may comprise more than one door and more than four wheelsets. Furthermore, the train 1 may have more than two railcars 1a, 1b and the number and the type of the sensor units 3a, 3b, 5a - 5h attached to each railcar 1a, 1b may not be limited to the depicted door sensor units 3a, 3b and vibration sensor units 5a - 5h. For example, each railcar may further comprise at least one temperature sensor unit to monitor the air conditioning thereof. Furthermore, several level sensor units may be used, to monitor the water supply and/or the lavatories of the train.

It shall be noted that the depicted train 1 merely serves as an example for a technical system. It is apparent to those skilled in the art that the described error detection by means of different sensors can be adapted to an arbitrary other technical system, for example, to an elevator or a wind turbine.

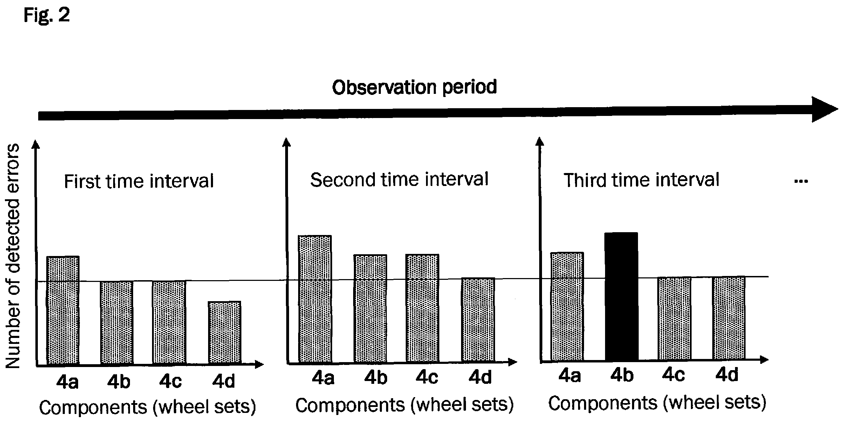

The bar charts depicted in Fig. 2 show schematically die number of errors detected for different components of the same type, namely for the wheel sets 4a - 4d, during successive time intervals of an observation period. The solid line marks the mean value of the detected errors at the wheel sets 4a - 4d in the first time interval. It can be seen, that in the second time interval the number of errors detected on all four wheels sets 4a - 4d is higher than in the first time interval. This suggests that the railcar 1a having the wheel sets 4a - 4d experienced unexpected environmental conditions during the second time interval leading to high vibrations at all four wheels sets 4a - 4d. As a result, the number of fault detections on each of the monitored wheel sets increased. To the contrary, in the third time interval, only the wheel set 4b shows an increased number of detected errors, which indicates that a technical fault has occurred on the respective wheel set 4b, since none of the other wheel sets 4a, 4c and 4d, operating under the same environmental conditions, shows an increased number of detected errors compared to the errors detected in the first time interval.

It becomes clear from Fig. 2 that comparing/correlating the number of errors detected for a respective component with the errors of further components of the same type, operating under the same environmental conditions, provides important information as to whether a "real" technical fault has occurred on a component or whether harsh environmental conditions detected by the monitoring sensors has caused the increased number of errors.

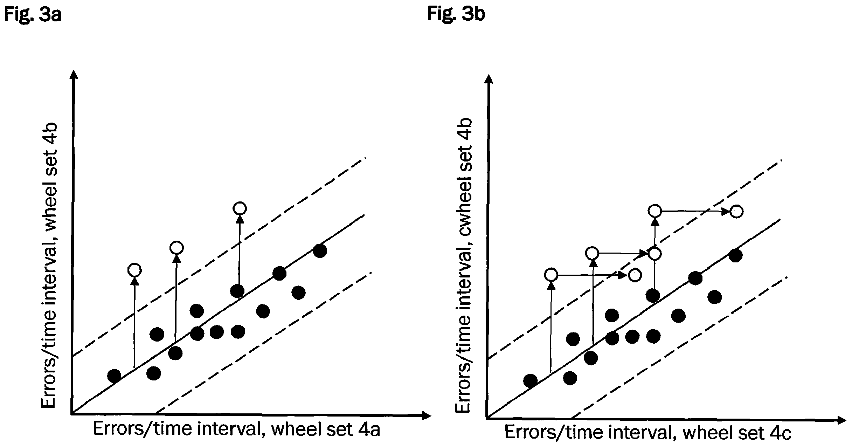

Figs. 3a and 3b depict schematically the detection and verification of a component fault by means of regression analyses. Fig. 3a shows a correlation between the event data of the wheel sets 4a and 4b. A component's event data includes the number of errors detected in each time interval during an observation period. It is visible that in general there is a good correlation between the event data of both wheel sets 4a and 4b. Most of the residual values of the event data of the wheel set 4b lie in the allowable range marked by the doted lines (black dots), which means that even in case of higher numbers of detected errors no technical fault has occurred. However, three of the residual values are located outside of the allowable range, namely above the predetermined residual threshold (white dots), indicating that the wheel set 4b could have a technical fault. In order to verify if a technical fault has occurred at the wheel set 4b or if the vibration sensor unit 5a, monitoring the wheel set 4a, has detected a wrong number of errors, the event data of the wheel set 4b is correlated to the event data of a third wheel set 4c (Fig. 3b). In case of a technical fault of the wheel set 4b, this second regression analysis may also show the three residual values of the event data of the wheels set 4b being above the upper limit (white dots). In case that the vibration sensor unit 5a of the wheel set 4a has detected a too low number of errors, the respective residual values of the event data of the wheel set 4b are below the predetermined residual threshold (gray dots). It may be also possible to correlate the event data of the wheel set 4a with the event data of the wheel set 4c or to correlate the event data of the wheel set 4b with the event data of a further wheel set 4d and so on. In principle, event data of all the wheels sets 4a - 4h of the train 1, may be used in the regression analysis as far as they operate under the same environmental conditions. This allows for improving the accuracy of the fault detection by using a comprehensive database. In other words, correlating event data of a plurality of components of the same type, operating under the same environmental conditions, allows for reliably detecting and verifying a technical fault of a single component.

Fig. 4 shows schematically a first example of the diagnostic device 20. The depicted diagnostic device 20 comprises an input unit 201, an event database 202, an analysis unit 203 and an output unit 204. The diagnostic device 20 may be attached to the train 1 (not depicted) or may be located outside the train 1. The diagnostic device 20 may be connected to a plurality of sensor units 3a, 3b, 5a - 5h attached to the train 1 for receiving measuring signals and/or event data 10 of a plurality of components 2a, 2b, 4a - 4h. Furthermore, the diagnostic device 20 may be connected to the train management system (TMS) of the train 1 (not depicted). It may also be possible that the diagnostic device 20 is part of the train management system (TMS) or vice versa.

The input unit 201 may receive event data 10 from the sensor units 3a, 3b, 5a - 5h of the components 2a, 2b, 4a - 4h of the train 1. This means that the input unit 201 may receive the number of errors per predetermined time interval over a predetermined observation period, each of the detected number of errors relating to a monitored component 2a, 2b, 4a-4h. Alternatively or additionally, the sensor units 3a, 3b, 5a - 5h may sent the measuring signals to the diagnostic device 20 and the input unit 201 may perform the error detection by comparing the measuring signals with predetermined measuring threshold values. After receiving and/or generating the event data 10, the input unit may transmit this data to the event database 203. In the event data base 203, the event data 10 of all components 2a, 2b, 4a - 4h of the train 1 may be stored for a large number of observation periods to record. Thus, an extensive database may be provided that can be used for regression analysis, in order to improve the accuracy of the fault detection.

Furthermore, the input unit 201 transmits the event data 10 to the analyzing unit 203 for performing regression analyses as described in connection with Figs. 3a and 3b. The results of the regression analyses and the detected and verified technical faults may also be stored in the event database 202. If the analyzing unit 203 determines and verifies a technical fault of a component 2a, 2b, 4a - 4h based on the respective residual value being above a predetermined residual threshold, the analyzing unit 203 may calculate a severity value taking the amplitude of the residual value into account. For example, if an amplitude of a residual value indicating a technical fault of a component 2a, 2b, 4a - 4h is more than twice as high as the predetermined residual threshold, a high severity value may be determined. In this case, the analyzing unit 203 may transmit a request for repair to the output unit 201 which may display the request on a screen and/or automatically issue the request to a repair service 30. if the amplitude of the residual value indicating a technical fault of a component 2a, 2b, 4a - 4h is less than twice as high as the predetermined residual threshold, a low severity value may be determined by the analyzing unit 203. in this case, a request for repair may be sent to the output unit 204 if the number of residual values being above the predetermined residual threshold is above a predetermined number. Furthermore, the analyzing unit 203 may transmit a request for repair to the output unit 204 if a verified fault of a component 2a, 2, 4a - 4h is maintained for a predetermined number of observation periods. The predetermined number of observation periods may be in a range of 3 to 6.

The output unit 204 may be a human machine interface which may display the received repair requests on a screen so that the operator is able to take the required measures. Alternatively or additionally, the output unit 204 may automatically transmit a request for repair to a repair service 30. The output unit 204 may provide all relevant results of the regression analysis required for condition-based maintenance to the operator, such as the development of amplitudes of the residual values and/or the development of the verified technical faults of each component 2a, 2b, 4a - 4h.

Fig. 5 shows schematically a second example of the diagnostic device 20. The second example of the diagnostic device 20 differs from the first example merely by the additional threshold database 205 in which the predetermined residual thresholds for each type of component 2a, 2b, 4a - 4h may be stored. In the first example of the diagnostic device 20 depicted in Fig. 4, the predetermined thresholds for each type of component 2a, 2b, 4a - 4h may be entered once into the input unit 201 and stored in the event database 202 when a new train 1 starts operating. The second example of the diagnostic device 20 additionally enables adapting the predetermined residual thresholds, in order to avoid error detections which are only caused by normal mechanical wear of the components. For this purpose, the analyzing unit 203 may continuously monitor the variance of the determined residual values of each component 2a, 2b, 4a - 4h. If the variance of the residual values increases continuously with a gradient less than a predetermined gradient value, the analyzing unit 203 may increase the residual thresholds by the determined gradient after a predetermined number of observation periods. The predetermined gradient value may be in a range of 1 % to 3% and the number of observation periods may be in a range of 40 to 60. For example, if the analyzing unit 203 determines that the variance of the residual values continuously increases by 1% over 50 observation periods, it may increase the predetermined residual threshold by 0.5 after 50 observation periods. The adapted residual thresholds of each monitored component 2a, 2b, 4a - 4h may be stored in the threshold database 205. This allows for controlling the wearing over lifetime of each component 2a, 2b, 4a - 4h which is helpful for planning the train maintenance.

Again summarizing, the herein described subject matter enables a reliable detection and verification of mechanical or electrical component faults of a technical system. In addition, condition-based maintenance of the technical system is supported by adapting and monitoring the predetermined residual threshold of each monitored component.

In general, all features of the different examples, which are described herein, and which are shown by the figures, may be combined either in part or in whole. The herein described subject matter shall also entail these combinations as far as they are apparent to the person skilled in the art without applying inventive activity.

It shall also be noted that the description and drawings merely illustrate the principles of the proposed methods, devices and systems. It will thus be appreciated that those skilled in the art will be able to devise various arrangements that, although not explicitly described or shown herein.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclsoure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g.,

Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

Reference sign list

| 1 | train |
|---|---|
| 1a, 1b | railcar |
| 2a, 2b | automatic door |
| 3a, 3b | door sensor unit |
| 4a - 4h | wheel set |
| 5a - 5h | vibration sensor unit |
| 10 | event data |
| 20 | diagnostic device |
| 30 | repair service |
| 201 | input unit |
| 202 | event database |
| 203 | analyzing unit |
| 204 | output unit |
| 205 | threshold database |

**Claims**

1. A method for identifying a fault of a component (2a, 2b, 4a - 4h) of a technical system having a diagnostic device (20),

   the technical system comprising a plurality of components (2a, 2b, 4a - 4h), wherein the plurality of components (2a, 2b, 4a - 4h) includes one or more groups of components (2a, 2b, 4a - 4h) of a same type,
   the method comprising:

   - receiving event data of the plurality of components (2a, 2b, 4a - 4h) over a predetermined observation period, wherein the predetermined observation period comprises a plurality of time intervals of predetermined length, and the event data of each of the plurality of components (2a, 2b, 4a - 4h) comprises a number of detected errors of a component (2a, 2b, 4a - 4h) per time interval over the predetermined observation period,
   - performing at least one regression analysis of event data of a group of components (2a, 2b, 4a - 4h) of the same type, the event data of each component (2a, 2b, 4a - 4h) of the group of components (2a, 2b, 4a - 4h) being determined under same environmental conditions,
   - determining residual values of event data of at least one component (2a, 2b, 4a - 4h) of the group of components (2a, 2b, 4a - 4h), and
   - identifying a fault of the at least one component (2a, 2b, 4a - 4h) of the group of components (2a, 2b, 4a - 4h) depending on the determined residual values.

2. The method according to claim 1 comprising:
   identifying the fault of the at least one component (2a, 2b, 4a - 4h) of the group of components (2a, 2b, 4a - 4h) of the same type if at least one determined residual value of the event data of the at least one component (2a, 2b, 4a - 4h) is above a predetermined residual threshold.

3. The method according to claim 1 or 2 comprising:

   - performing a regression analysis of event data of a first component (2a, 2b, 4a - 4h) and a second component (2a, 2b, 4a - 4h), the first and the second component (2a, 2b, 4a - 4h) belonging to the group of components (2a, 2b, 4a - 4h) of the same type, the event data of the first and the second component (2a, 2b, 4a - 4h) being determined under the same environmental conditions for the predetermined observation period,
   using the event data of the first component (2a, 2b, 4a - 4h) as input values and the event data of the second component (2a, 2b, 4a - 4h) as output values of the regression analysis,
   - determining residual values of the event data of the second component (2a, 2b, 4a - 4h),
   - identifying at least one fault of the second component (2a, 2b, 4a - 4h) if at least one residual value of the event data of the second component is above the predetermined residual threshold.

4. The method according to claim 3 comprising:

   - performing a regression analysis of event data of the second component (2a, 2b, 4a - 4h) and a third component (2a, 2b, 4a - 4h), the second and the third component (2a, 2b, 4a - 4h) belonging to the group of components (2a, 2b, 4a - 4h) of the same type, the event data of the second and the third component (2a, 2b, 4a - 4h) being determined under the same environmental conditions for the predetermined observation period,

using the event data of the third component (2a, 2b, 4a - 4h) as input values and the event data of the second component (2a, 2b, 4a - 4h) as output values of the regression analysis;

- determining residual values of the event data of the second component (2a, 2b, 4a - 4h);

- verifying the at least one fault of the second component (2a, 2b, 4a - 4h) if the at least one residual value of the event data of the second component (2a, 2b, 4a - 4h) is above the predetermined residual threshold;

- identifying at least one incorrect event data value of the first component (2a, 2b, 4a - 4h) if none of the residual values of the event data of the second component (2a, 2b, 4a - 4h) is above the predetermined residual threshold.

5. The method according to claim 4 comprising:

- determining a severity value of the at least one verified fault of the second component (2a, 2b, 4a - 4h) depending on an amplitude of the at least one residual value being above the predetermined residual threshold.

6. The method according to at least one of the preceding claims comprising:
issuing a request for repair if a number of verified faults of a component (2a, 2b, 4a - 4h) is above a predetermined number.

7. The method according to claim 6 comprising:
issuing the request for repair if the severity value of a verified fault of a component (2a, 2b, 4a - 4h) is above a predetermined severity value threshold.

8. The method according to at least one of the preceding claims 7 further comprising:
issuing the request for repair if the verified fault of a component (2a, 2b, 4a - 4h) is maintained for a predetermined number of observation periods.

9. The method according to at least one of the preceding claims comprising:

- adapting the predetermined residual threshold over a lifetime of a component (2a, 2b, 4a - 4h).

10. Diagnostic device (20) including at least one input unit (201), at least one database (202, 205), at least one analyzing unit (203) and at least one output unit (204), the diagnostic device configured to perform the method according to at least one of the preceding claims.

11. The diagnostic device (20) according to claim 10, wherein the analyzing unit (203) is configured to identify the fault of the at least one component (2a, 2b, 4a - 4h) of the group of components (2a, 2b, 4a - 4h) of the same type if at least one determined residual value of the event data of the at least one component (2a, 2b, 4a - 4h) is above a predetermined residual threshold.

12. The diagnostic device (20) according to at least one of the preceding claims 10 to 11, wherein the output unit is configured to issue a request for repair if a number of verified faults of a component (2a, 2b, 4a - 4h) is above a predetermined number, and/or if a severity value of a verified fault of a component (2a, 2b, 4a - 4h) is above a predetermined severity value threshold, and/or if a verified fault of a component (2a, 2b, 4a - 4h) is maintained for a predetermined number of observation periods.

13. The diagnostic device (20) according to at least one of the preceding claims 10 to 12, wherein the diagnosis unit comprises at least one event database (202) and at least one threshold database (205).

14. Technical system comprising a plurality of components (2a, 2b, 4a - 4h), wherein the plurality of components includes one or more groups of components of a same type, and the diagnostic device (20) according tc claims 10 to 13.

15. Computer program product storable in a memory comprising instructions which, when carried out by a computer, cause the computer to perform the method according to at least one of the method claims 1 to 9.

**Patentansprüche**

1. Verfahren zum identifizieren eines Fehlers einer Komponente (2a, 2b, 4a-4h) eines technischen Systems, das eine Diagnosevorrichtung (20) hat,

wobei das technische System mehrere Komponenten (2a, 2b, 4a-4h) umfasst, wobei die mehreren Komponenten (2a, 2b, 4a-4h) eine oder mehrere Gruppen von Komponenten (2a, 2b, 4a-4h) eines gleichen Typs umfassen,
wobei das Verfahren die folgenden Schritte umfasst:

- Empfangen von Ereignisdaten der mehreren Komponenten (2a, 2b, 4a-4h) über eine festgelegte Beobachtungsperiode, wobei die festgelegte Beobachtungsperiode mehrere Zeitintervalle einer festgelegten Länge umfasst und wobei die Ereignisdaten jeder der mehreren Komponenten (2a, 2b, 4a-4h) eine Anzahl von detektierten Fehlern einer Komponente (2a, 2b, 4a-4h) pro Zeitintervall während der festgelegten Beobachtungsperiode umfassen,
- Durchführen wenigstens einer Regressionsanalyse von Ereignisdaten einer Gruppe von Komponenten (2a, 2b, 4a-4h) des gleichen Typs, wobei die Ereignisdaten jeder Komponente (2a, 2b, 4a-4h) der Gruppe von Komponenten (2a, 2b, 4a-4h) unter den gleichen Umgebungsbedingungen ermittelt werden,
- Ermitteln von Residuenwerten von Ereignisdaten wenigstens einer Komponente (2a, 2b, 4a-4h) der Gruppe von Komponenten (2a, 2b, 4a-4h), und

identifizieren eines Fehlers der wenigstens einen Komponente (2a, 2b, 4a-4h) der Gruppe von Komponenten (2a, 2b, 4a-4h) in Abhängigkeit von den ermittelten Residuenwerten.

2. Verfahren nach Anspruch 1, das den folgenden Schritt umfasst:
Identifizieren des Fehlers der wenigstens einen Komponente (2a, 2b, 4a-4h) der Gruppe von Komponenten (2a, 2b, 4a-4h) des gleichen Typs, falls wenigstens ein ermittelter Residuenwert der Ereignisdaten der wenigstens einen Komponente (2a, 2b, 4a-4h) über einem festgelegten Residuenschwellenwert liegt.

3. Verfahren nach Anspruch 1 oder 2, das die folgenden Schritte umfasst:

- Durchführen einer Regressionsanalyse von Ereignisdaten einer ersten Komponente (2a, 2b, 4a-4h) und einer zweiten Komponente (2a, 2b, 4a-4h), wobei die erste und die zweite Komponente (2a, 2b, 4a-4h) zur Gruppe von Komponenten (2a, 2b, 4a-4h) des gleichen Typs gehören, wobei die Ereignisdaten der ersten und der zweiten Komponente (2a, 2b, 4a-4h) unter den gleichen Umgebungsbedingungen für die festgelegte Beobachtungsperiode ermittelt werden,
- Verwenden der Ereignisdaten der ersten Komponente (2a, 2b, 4a-4h) als Eingangswerte und der Ereignisdaten der zweiten Komponente (2a, 2b, 4a-4h) als Ausgangswerte der Regressionsanalyse,
- Ermitteln von Residuenwerten der Ereignisdaten der zweiten Komponente (2a, 2b, 4a-4h),

- identifizieren wenigstens eines Fehlers der zweiten Komponente (2a, 2b, 4a-4h), falls wenigstens ein Residuenwert der Ereignisdaten der zweiten Komponente über dem festgelegten Residuenschwellenwert liegt.

4. Verfahren nach Anspruch 3, das die folgenden Schritte umfasst:

- Durchführen einer Regressionsanalyse von Ereignisdaten der zweiten Komponente (2a, 2b, 4a-4h) und einer dritten Komponente (2a, 2b, 4a-4h), wobei die zweite und die dritte Komponente (2a, 2b, 4a-4h) zur Gruppe von Komponenten (2a, 2b, 4a-4h) des gleichen Typs gehören, wobei die Ereignisdaten der zweiten und der dritten Komponente (2a, 2b, 4a-4h) unter den gleichen Umgebungsbedingungen für die festgelegte Beobachtungsperiode ermittelt werden,
- Verwenden der Ereignisdaten der dritten Komponente (2a, 2b, 4a-4h) als Eingangswerte und der Ereignisdaten der zweiten Komponente (2a, 2b, 4a-4h) als Ausgangswerte der Regressionsanalyse;
- Ermitteln von Residuenwerten der Ereignisdaten der zweiten Komponente (2a, 2b, 4a-4h);
- Verifizieren des wenigstens einen Fehlers der zweiten Komponente (2a, 2b, 4a-4h), falls der wenigstens eine Residuenwert der Ereignisdaten der zweiten Komponente (2a, 2b, 4a-4h) über dem festgelegten Residuenschwellenwert liegt;
- identifizieren wenigstens eines nicht korrekten Ereignisdatenwerts der ersten Komponente (2a, 2b, 4a-4h), falls keiner der Residuenwerte der Ereignisdaten der zweiten Komponente (2a, 2b, 4a-4h) über dem festgelegten Residuenschwellenwert liegt.

5. Verfahren nach Anspruch 4, das den folgenden Schritt umfasst:

- Ermitteln eines Schweregradwerts des wenigstens einen verifizierten Fehlers der zweiten Komponente (2a, 2b, 4a-4h) in Abhängigkeit von einer Amplitude des wenigstens einen Residuenwerts, der über dem festgelegten Residuenschwellenwert liegt.

6. Verfahren nach wenigstens einem der vorhergehenden Ansprüche, das den folgenden Schritt umfasst:
Ausgeben einer Anfrage nach einer Reparatur, falls eine Anzahl von verifizierten Fehlern einer Komponente (2a, 2b, 4a-4h) über einer festgelegten Anzahl liegt.

7. Verfahren nach Anspruch 6, das den folgenden Schritt umfasst:

Ausgeben der Anfrage nach einer Reparatur, falls der Schweregradwert eines verifizierten Fehlers einer Komponente (2a, 2b, 4a-4h) über einem festgelegten Schweregrad-Schwellenwert liegt.

**8.** Verfahren nach wenigstens einem der vorhergehenden Ansprüche 7, das ferner den folgenden Schritt umfasst:

Ausgeben der Anfrage nach einer Reparatur, falls der verifizierte Fehler einer Komponente (2a, 2b, 4a-4h) für eine festgelegte Anzahl von Beobachtungsperioden bestehen bleibt.

**9.** Verfahren nach wenigstens einem der vorhergehenden Ansprüche, das den folgenden Schritt umfasst:

- Anpassen des festgelegten Residuenschwellenwerts über eine Lebensdauer einer Komponente (2a, 2b, 4a-4h).

**10.** Diagnosevorrichtung (20), die wenigstens eine Eingabeeinheit (201), wenigstens eine Datenbank (202, 205), wenigstens eine Analyseeinheit (203) und wenigstens eine Ausgabeeinheit (204) umfasst, wobei die Diagnosevorrichtung konfiguriert ist, das Verfahren nach wenigstens einem der vorhergehenden Ansprüche auszuführen.

**11.** Diagnosevorrichtung (20) nach Anspruch 10, wobei die Analyseeinheit (203) konfiguriert ist, den Fehler der wenigstens einen Komponente (2a, 2b, 4a-4h) der Gruppe von Komponenten (2a, 2b, 4a-4h) des gleichen Typs zu identifizieren, falls wenigstens ein ermittelter Residuenwert der Ereignisdaten der wenigstens einen Komponente (2a, 2b, 4a-4h) über einem festgelegten Residuenschwellenwert liegt.

**12.** Diagnosevorrichtung (20) nach wenigstens einem der vorhergehenden Ansprüche 10 bis 11, wobei die Ausgabeeinheit konfiguriert ist, eine Anfrage nach einer Reparatur auszugeben, falls eine Anzahl von verifizierten Fehlern einer Komponente (2a, 2b, 4a-4h) über einer festgelegten Anzahl liegt, und/oder falls ein Schweregradwert eines verifizierten Fehlers einer Komponente (2a, 2b, 4a-4h) über einem festgelegten Schweregrad-Schwellenwert liegt, und/oder falls ein verifizierter Fehler einer Komponente (2a, 2b, 4a-4h) für eine festgelegte Anzahl von Beobachtungsperioden bestehen bleibt.

**13.** Diagnosevorrichtung (20) nach wenigstens einem der Ansprüche 10 bis 12, wobei die Diagnoseeinheit wenigstens eine Ereignisdatenbank (202) und wenigstens eine Schwellenwertdatenbank (205) umfasst.

**14.** Technisches System, das Folgendes umfasst: mehrere Komponenten (2a, 2b, 4a-4h), wobei die mehreren Komponenten eine oder mehrere Gruppen von Komponenten des gleichen Typs umfassen, und die Diagnosevorrichtung (20) nach Anspruch 10 bis 13.

**15.** Computerprogrammprodukt, das in einem Speicher gespeichert werden kann, das Anweisungen umfasst, die dann, wenn sie durch einen Computer ausgeführt werden, den Computer veranlassen, das Verfahren nach wenigstens einem der Verfahrensansprüche 1 bis 9 auszuführen.

**Revendications**

**1.** Procédé d'identification d'une panne d'un composant (2a, 2b, 4a - 4h) d'un système technique ayant un dispositif de diagnostic (20),

le système technique comprenant une pluralité de composants (2a, 2b, 4a - 4h), la pluralité de composants (2a, 2b, 4a - 4h) incluant un ou plusieurs groupes de composants (2a, 2b, 4a - 4h) d'un même type,
le procédé comprenant les étapes consistant à :

- recevoir des données d'événement de la pluralité de composants (2a, 2b, 4a - 4h) sur une période d'observation prédéterminée, la période d'observation prédéterminée comprenant une pluralité d'intervalles de temps d'une longueur prédéterminée, et les données d'événement de chacun de la pluralité de composants (2a, 2b, 4a - 4h) comprenant un nombre d'erreurs détectées d'un composant (2a, 2b, 4a - 4h) par intervalle de temps sur la période d'observation prédéterminée,
- effectuer au moins une analyse de régression de données d'événement d'un groupe de composants (2a, 2b, 4a - 4h) du même type, les données d'événement de chaque composant (2a, 2b, 4a - 4h) du groupe de composants (2a, 2b, 4a - 4h) étant déterminées sous les mêmes conditions environnementales,
- déterminer des valeurs résiduelles de données d'événement d'au moins un composant (2a, 2b, 4a - 4h) du groupe de composants (2a, 2b, 4a - 4h), et
- identifier une panne dudit au moins un composant (2a, 2b, 4a - 4h) du groupe de composants (2a, 2b, 4a - 4h) en dépendance des valeurs résiduelles déterminées.

**2.** Procédé selon la revendication 1, comprenant l'étape consistant à :
identifier la panne dudit au moins un composant (2a, 2b, 4a - 4h) du groupe de composants (2a, 2b, 4a - 4h) du même type si au moins une valeur résiduelle déterminée des données d'événement dudit au moins un composant (2a, 2b, 4a - 4h) est au-dessus d'une valeur résiduelle seuil prédéterminée.

3. Procédé selon la revendication 1 ou 2, comprenant les étapes consistant à :

- effectuer une analyse de régression de données d'événement d'un premier composant (2a, 2b, 4a - 4h) et d'un deuxième composant (2a, 2b, 4a - 4h), le premier et le deuxième composant (2a, 2b, 4a - 4h) appartenant au groupe de composants (2a, 2b, 4a - 4h) du même type, les données d'événement du premier et du deuxième composant (2a, 2b, 4a - 4h) étant déterminées sous les mêmes conditions environnementales pendant la période d'observation prédéterminée,
- utiliser les données d'événement du premier composant (2a, 2b, 4a - 4h) comme valeurs d'entrée et les données d'événement du deuxième composant (2a, 2b, 4a - 4h) comme valeurs de sortie de l'analyse de régression,
- déterminer des valeurs résiduelles des données d'événement du deuxième composant (2a, 2b, 4a - 4h),
- identifier au moins une panne du deuxième composant (2a, 2b, 4a - 4h) si au moins une valeur résiduelle des données d'événement du deuxième composant est au-dessus de la valeur résiduelle seuil prédéterminée.

4. Procédé selon la revendication 3, comprenant les étapes consistant à :

- effectuer une analyse de régression de données d'événement du deuxième composant (2a, 2b, 4a - 4h) et d'un troisième composant (2a, 2b, 4a - 4h), le deuxième et le troisième composant (2a, 2b, 4a - 4h) appartenant au groupe de composants (2a, 2b, 4a - 4h) du même type, les données d'événement du deuxième et du troisième composant (2a, 2b, 4a - 4h) étant déterminées sous les mêmes conditions environnementales pendant la période d'observation prédéterminée,
- utiliser les données d'événement du troisième composant (2a, 2b, 4a - 4h) comme valeurs d'entrée et les données d'événement du deuxième composant (2a, 2b, 4a - 4h) comme valeurs de sortie de l'analyse de régression,
- déterminer des valeurs résiduelles des données d'événement du deuxième composant (2a, 2b, 4a - 4h),
- vérifier ladite au moins une panne du deuxième composant (2a, 2b, 4a - 4h) si ladite au moins une valeur résiduelle des données d'événement du deuxième composant (2a, 2b, 4a - 4h) est au-dessus de la valeur seuil résiduelle prédéterminée,
- identifier au moins une valeur de données d'événement incorrecte du premier composant (2a, 2b, 4a - 4h) si aucune des valeurs résiduelles des données d'événement du deuxième composant (2a, 2b, 4a - 4h) n'est au-dessus de la valeur résiduelle seuil prédéterminée.

5. Procédé selon la revendication 4, comprenant l'étape consistant à :

- déterminer une valeur de gravité de ladite au moins une panne vérifiée du deuxième composant (2a, 2b, 4a - 4h) en dépendance d'une amplitude de ladite au moins une valeur résiduelle qui est au-dessus de la valeur résiduelle seuil prédéterminée.

6. Procédé selon l'une au moins des revendications précédentes, comprenant l'étape consistant à :

- émettre une requête de réparation si un nombre de pannes vérifiées d'un composant (2a, 2b, 4a - 4h) est au-dessus d'un nombre prédéterminé.

7. Procédé selon la revendication 6, comprenant l'étape consistant à :

- émettre la requête de réparation si la valeur de gravité d'une panne vérifiée d'un composant (2a, 2b, 4a - 4h) est au-dessus d'une valeur de gravité seuil prédéterminée.

8. Procédé selon l'une au moins des revendications précédentes 7, comprenant en outre l'étape consistant à :

- émettre la requête de réparation si la panne vérifiée d'un composant (2a, 2b, 4a - 4h) est maintenue pendant un nombre déterminé de périodes d'observation.

9. Procédé selon l'une au moins des revendications précédentes, comprenant l'étape consistant à :

- adapter la valeur résiduelle seuil prédéterminée tout au long d'un cycle de vie d'un composant (2a, 2b, 4a - 4h).

10. Dispositif de diagnostic (20) incluant au moins une unité d'entrée (201), au moins une base de données (202, 205), au moins une unité d'analyse (203) et au moins une unité de sortie (204), le dispositif de diagnostic étant configuré pour effectuer le procédé selon l'une au moins des revendications précédentes.

11. Dispositif de diagnostic (20) selon la revendication 10, dans lequel l'unité d'analyse (203) est configurée pour identifier la panne dudit au moins un composant (2a, 2b, 4a - 4h) du groupe de composants (2a, 2b, 4a - 4h) du même type si au moins une valeur résiduelle déterminée des données d'événement dudit au moins un composant (2a, 2b, 4a - 4h) est au-dessus d'une valeur résiduelle seuil prédéterminée.

12. Dispositif de diagnostic (20) selon l'une au moins des revendications précédentes 10 à 11, dans lequel l'unité de sortie est configurée pour émettre une requête de réparation si un nombre de pannes vérifiées d'un composant (2a, 2b, 4a - 4h) est au-dessus d'un nombre prédéterminé, et/ou si une valeur de gravité d'une faute vérifiée d'un composant (2a, 2b, 4a - 4h) est au-dessus d'une valeur de gravité seuil prédéterminée, et/ou si une panne vérifiée d'un composant (2a, 2b, 4a - 4h) est maintenue pendant un nombre prédéterminé de périodes d'observation.

13. Dispositif de diagnostic (20) selon l'une au moins des revendications précédentes 10 à 12, dans lequel l'unité de diagnostic comprend au moins une base de données d'événement (202) et au moins une base de données de valeurs seuils (205).

14. Système technique comprenant une pluralité de composants (2a, 2b, 4a - 4h), la pluralité de composants incluant plusieurs groupes de composants d'un même type, et le dispositif de diagnostic (20) selon les revendications 10 à 13.

15. Produit de programme d'ordinateur pouvant être stocké dans une mémoire comprenant des instructions qui, quand elles sont exécutées par un ordinateur, amènent l'ordinateur à effectuer le procédé selon l'une au moins des revendications 1 à 9.

EP 3 896 542 B1

**Fig. 1**

Fig. 2

Observation period

Number of detected errors

First time interval

4a 4b 4c 4d

Components (wheel sets)

Second time interval

4a 4b 4c 4d

Components (wheel sets)

Third time interval ...

4a 4b 4c 4d

Components (wheel sets)

EP 3 896 542 B1

**Fig. 3b**

Errors/time interval, cwheel set 4b

Errors/time interval, wheel set 4c

**Fig. 3a**

Errors/time interval, wheel set 4b

Errors/time interval, wheel set 4a

Fig. 4

EP 3 896 542 B1

**Fig. 5**

**EP 3 896 542 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017502639 A
- AT 508714 A1
- US 2013173218 A1